# EUROPÄISCHE PATENTSCHRIFT

(11) **EP 4 054 786 B1**
(45) Veröffentlichungstag und Bekanntmachung des Hinweises auf die Patenterteilung: **22.04.2026**
(21) Anmeldenummer: 19798614.4
(22) Anmeldetag: 05.11.2019
(51) Int. Cl.: B23K 20/00, B23K 20/10, B23K 37/04, H01R 4/02, H01R 43/02, B23K 101/32, B23K 101/38

(54) **ULTRASCHALLSCHWEISSEINRICHTUNG MIT VERLAGERBAREM ANSCHLAGELEMENT**
ULTRASONIC WELDING DEVICE INCLUDING ADJUSTABLE STOP-ELEMENT
DISPOSITIF DE SOUDAGE PAR ULTRASONS AVEC ARRET AJUSTABLE

(43) Veröffentlichungstag der Anmeldung: 14.09.2022
(73) Patentinhaber: Schunk Sonosystems GmbH, 35435 Wettenberg (DE)
(72) Erfinder: THOMS, Enno, 35435 Wettenberg (DE); MÜLLER, Stefan, 35580 Wetzlar (DE); WAGENBACH, Rainer, 35799 Merenberg (DE); WERNER, Waldemar, 35447 Reiskirchen (DE); GÜNTHER, Daniel, 35428 Langgöns (DE); KOSECKI, Dariusz, 35444 Biebertal (DE); BECKER, Stephan, 35037 Marburg (DE); KOCH, Eugen, 35305 Grünberg (DE)
(74) Vertreter: Qip Patent & Recht Dr. Kuehn & Partner mbB
(86) Internationale Anmeldenummer: PCT/EP2019/080247
(87) Internationale Veröffentlichungsnummer: WO 2021/089123

(56) Entgegenhaltungen:
- WO-A1-2019/013331
- WO-A1-2019/091696
- DE-B3- 102013 222 938
- DE-B3- 102013 222 939
- DE-B3- 102015 222 013
- JP-A- 2006 015 354

## Beschreibung

### HINTERGRUND DER ERFINDUNG

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Kabel bzw. deren Litzen mechanisch und elektrisch leitfähig miteinander zu verbinden. Hierdurch können beispielsweise Kabelstränge oder Kabelbäume gefertigt werden, mithilfe derer elektrische Verbraucher zum Beispiel innerhalb eines Fahrzeugs miteinander, mit einer Energiequelle und/oder mit einer Steuerung elektrisch verbunden werden können.

Um zwei elektrisch leitfähige Komponenten stoffschlüssig und somit mechanisch belastbar und elektrisch gut leitfähig miteinander zu verbinden, wurde das sogenannte Ultraschallschweißen entwickelt. Es ist eine spezielle Ausprägung des Reibschweißens, bei dem zu verschweißende Komponenten, die auch als Fügepartner oder Schweißgut bezeichnet werden, mit Oberflächen aneinander in Anlage gebracht und unter geringem Druck und hochfrequenten mechanischen Schwingungen gegeneinander bewegt werden. Die Schwingungen können hierbei mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen von metallischen Fügepartnern wie zum Beispiel Litzen von zwei oder mehreren zu verbindenden Kabeln oder wie zum Beispiel zwei oder mehr Einzeldrähten einer verschweißend zu verdichtenden Litze eines Kabels eingesetzt werden. Hierzu werden die Fügepartner im Allgemeinen in einen Aufnahmeraum einer Ultraschallschweißeinrichtung eingelegt und anschließend zwischen einer Ultraschall-schwingenden Sonotrode und einem Amboss miteinander verschweißt.

Beim Ultraschallschweißen kann die Relativpositionierung der Fügepartner zu einander während eines Ultraschallschweißvorgangs einen erheblichen Einfluss auf eine Qualität der erzeugten Verschweißung haben. Insbesondere sollten Enden einer, zweier oder mehrerer als Fügepartner zu verschweißender Litzen in dem Aufnahmeraum der Ultraschallschweißeinrichtung möglichst genau übereinander positioniert sein, sodass sie in etwa fluchtend miteinander zwischen der Sonotrode und dem Amboss aufgenommen werden und miteinander verschweißt werden können.

Herkömmlich musste oft ein Bediener einer Ultraschallschweißeinrichtung darauf achten, zu verschweißende Kabel mit ihren Litzen korrekt innerhalb des Aufnahmeraums der Ultraschallschweißeinrichtung zu positionieren. Hierzu konnten innerhalb des Aufnahmeraums Markierungen vorgesehen sein, an denen die Enden der Litzen ausgerichtet werden sollten.

Um Kabel miteinander in Form eines sogenannten Endknotens zu verschweißen, d.h. wenn beide Kabel aus einer selben Richtung kommend in den Aufnahmeraum der Ultraschallschweißeinrichtung einzulegen waren, war es auch bekannt, ein Anschlagelement in Form eines sogenannten Litzenendanschlages manuell an eine Montageplatte anzuschrauben und diese Montageplatte dann an geeigneter Position in der Ultraschallschweißeinrichtung zu montieren. Die Litzen der Kabel konnten dann in dem Aufnahmeraum an dem Anschlagelement stirnseitig anliegend positioniert werden. Allerdings mussten solche Anschlagelemente aufwendig montiert und bei Nichtverwendung wieder demontiert werden.

DE 10 2013 222 938 B3, welche die Basis für den Oberbegriff von Anspruch 1 bildet, offenbart eine Vorrichtung zum Verschweißen von elektrischen Leitern.

### ZUSAMMENFASSUNG DER ERFINDUNG UND VORTEILHAFTER AUSFÜHRUNGSFORMEN

Es kann ein Bedarf an einer Ultraschallschweißeinrichtung zum Verschweißen zweier oder mehrerer Fügepartner bestehen, welche einfach zu bedienen ist und/oder welche in einfacher Weise für verschiedene Einsatzzwecke, insbesondere zur Erzeugung verschiedenartiger Schweißknoten, konfigurierbar ist.

Einem solchen Bedarf kann mit dem Gegenstand des unabhängigen Anspruchs entsprochen werden. Vorteilhafte Ausführungsformen sind in den abhängigen Ansprüchen sowie der nachfolgenden Beschreibung definiert.

Gemäß einem Aspekt der vorliegenden Erfindung wird eine Ultraschallschweißeinrichtung nach Anspruch 1 beschrieben,.

Ideen und mögliche Merkmale zu Ausführungsformen der Erfindung können unter anderem als auf den nachfolgend beschriebenen Gedanken und Erkenntnissen beruhend angesehen werden.

Im Aufnahmeraum der Ultraschallschweißeinrichtung sollen vor und während des Schweißvorgangs die zu verschweißenden Fügepartner aufgenommen werden. Der Aufnahmeraum ist dabei typischerweise zumindest von vier Seiten her begrenzt, sodass die Fügepartner lediglich in einem begrenzten Aufnahmevolumen Platz finden. An zwei gegenüberliegenden Seiten, d.h. beispielsweise oben und unten, kann der Aufnahmeraum einerseits von einer Oberfläche der Sonotrode und andererseits von einer Oberfläche des Amboss begrenzt sein. Die Sonotrode und/oder der Amboss können dabei verlagerbar sein, sodass diese beiden Komponenten relativ zueinander aufeinander zu bzw. voneinander weg bewegt werden können und auf diese Weise der Aufnahmeraum in einer ersten Richtung, d.h. beispielsweise in senkrechter Richtung, verkleinert bzw. vergrößert werden kann. An zwei weiteren gegenüberliegenden Seiten, welche quer, vorzugsweise senkrecht, zu den zuvor genannten beiden Seiten verlaufen, d.h. beispielsweise links und rechts, kann der Aufnahmeraum einerseits von einer Oberfläche des Touchierelements und andererseits von einer Oberfläche des Seitenschiebers begrenzt werden. Das Touchierelement und/oder der Seitenschieber können dabei wiederum verlagerbar sein, sodass diese beiden Komponenten relativ zueinander aufeinander zu bzw. voneinander wegbewegt werden können und auf diese Weise der Aufnahmeraum in einer zu der oben genannten ersten Richtung senkrecht verlaufenden zweiten Richtung verkleinert bzw. vergrößert werden kann. Die Oberflächen der genannten Komponenten können den Aufnahmeraum dabei wie ein Rahmen, insbesondere ein viereckiger Rahmen, umgeben. An der nicht von den genannten Komponenten begrenzten fünften oder sechsten Seite können die Fügepartner in den rahmenartig umgebenen Aufnahmeraum eingebracht bzw. eingeschoben werden.

Die Formulierung "den Aufnahmeraum an einer Seite begrenzen" kann dabei dahingehend verstanden werden, dass die jeweilige Oberfläche der jeweils genannten Komponente dazu führt, dass sich die Fügepartner nicht über die von dieser Oberfläche bewirkte Begrenzung hinausbewegen können. Hierzu kann die jeweilige Oberfläche den Aufnahmeraum an der jeweiligen Seite komplett abdecken. Alternativ kann jedoch auch eine lediglich teilweise Abdeckung des Aufnahmeraums an der jeweiligen Seite genügen, solange sichergestellt bleibt, dass die Fügepartner innerhalb des Aufnahmeraums gehalten werden.

Die sich jeweils gegenüberliegenden beiden Komponenten, d.h. die Sonotrode und der Amboss bzw. das Touchierelement und der Seitenschieber, können vorzugsweise derart relativ zueinander bewegt werden, insbesondere aufeinander zu bewegt werden, um ein Volumen des Aufnahmeraums temporär verkleinern zu können und um insbesondere die darin aufgenommenen Fügepartner in Anlage miteinander pressen zu können.

Indem den Fügepartnern lediglich ein relativ kleinerer Aufnahmeraum zur Verfügung gestellt wird, der quer zu einer Richtung, in der die meist länglichen Fügepartner in den Aufnahmeraum eingeschoben bzw. eingelegt werden, rahmenartig von den vier genannten Komponenten umgeben ist, kann erreicht werden, dass die Fügepartner bereits mit einer vorgegebenen Positionierung relativ zueinander in dem Aufnahmeraum angeordnet werden können bzw. müssen, bevor der eigentliche Schweißvorgang beginnt, d.h. bevor die Fügepartner zwischen der Sonotrode und dem Amboss zusammengepresst werden. Beispielsweise kann erreicht werden, dass Litzen zweier als Fügepartner dienender und an ihren Enden abisolierter Kabel in dem Aufnahmeraum derart angeordnet sind, dass sie beim Zusammenführen der Sonotrode und des Amboss aufeinander zu eng in Anlage miteinander gepresst werden. Wenn die Sonotrode und der Amboss das Aufnahmevolumen von oben und unten begrenzen, bedeutet dies, dass die beiden Kabelenden vorteilhafterweise vertikal übereinander angeordnet sind. Eine solche Anordnung wirkt sich typischerweise positiv auf ein Schweißergebnis aus, wohingegen nebeneinander angeordnete Litzen oft nur unzureichend verschweißt würden.

Im Unterschied zu herkömmlichen Ultraschallschweißeinrichtungen soll die hier beschriebene Ultraschallschweißeinrichtung über ein erstes Anschlagelement verfügen, mithilfe dessen auch eine fünfte Seite des Aufnahmeraums begrenzt werden kann. Diese fünfte Seite verläuft quer, vorzugsweise senkrecht, zu den anderen oben beschriebenen vier Seiten, welche rahmenartig von sonstigen Komponenten begrenzt werden. Das erste Anschlagelement kann somit einen Durchgang durch den rahmenartig begrenzten Aufnahmeraum, wie er sich ansonsten zwischen der fünften und der gegenüberliegenden sechsten Seite ergeben würde, an der fünften Seite begrenzen bzw. verschließen.

Dementsprechend können ein oder mehrere Fügepartner zwar an der sechsten Seite in den Aufnahmeraum eingebracht werden, aber den Aufnahmeraum an der fünften Seite nicht mehr verlassen bzw. über den Aufnahmeraum an der fünften Seite hinausragen. Stattdessen können längliche Fügepartner lediglich mit ihrer Stirnseite bis an eine zu dem Aufnahmeraum gerichtete Oberfläche des Anschlagelements reichen und mit dieser in Anlage kommen.

Somit können ein oder mehrere zu verschweißende Fügepartner jeweils in den Aufnahmeraum eingebracht werden und mit ihrer Stirnseite bis zu dem Anschlagelement geschoben werden, sodass ihre stirnseitigen Enden an dem Anschlagelement anstoßen ausgerichtet sind bzw. sodass, im Falle mehrerer Fügepartner, ihre stirnseitigen Enden miteinander fluchtend übereinander und/oder nebeneinander positioniert sind. Das Einbringen der Fügepartner kann durch einen die Ultraschallschweißeinrichtung bedienenden Nutzer oder durch eine andere Maschine erfolgen.

Das Vorsehen des Anschlagelements an der fünften Seite des Aufnahmeraums ermöglicht ein sehr einfaches Einbringen der Fügepartner in den Aufnahmeraum in einer relativ zueinander ausgerichteten Konfiguration. Beispielsweise kann eine Person Kabel von der sechsten Seite her kommend in den Aufnahmeraum einschieben, bis sie spürt, dass die Kabel an dem gegenüberliegend angeordneten Anschlagelement anstoßen. Eine visuelle Kontrolle der Positionierung der Kabel braucht demnach zumindest in manchen Fällen nicht erfolgen.

Allerdings wurde erkannt, dass das die fünfte Seite begrenzende Anschlagelement in bestimmten Fällen hinderlich bzw. unerwünscht sein kann. Beispielsweise kann es gewünscht sein, die Ultraschallschweißeinrichtung auch zum Schweißen sogenannter Durchgangsknoten einsetzen zu können. Die in einer Konfiguration als Durchgangsknoten miteinander verschweißten Kabel bilden eine Verlängerung einer elektrischen Leitung, wohingegen die Konfiguration als Endknoten als eine Art Rückführung der elektrischen Leitung angesehen werden kann. Um einen Durchgangsknoten durch Ultraschallschweißen zu erzeugen, werden Kabel von gegenüberliegenden Seiten her in den Aufnahmeraum eingebracht. Dementsprechend sollten die einander gegenüberliegenden fünften und sechsten Seiten des Aufnahmeraums für diesen Anwendungszweck zumindest nicht permanent von einem Anschlagelement begrenzt werden.

Daher wird vorgeschlagen, das erste Anschlagelement zwar als integrierte Komponente der Ultraschallschweißeinrichtung vorzusehen, d.h., das erste Anschlagelement ist permanent verbunden mit anderen Komponenten der Ultraschallschweißeinrichtung und wechselwirkt mit diesen. Allerdings soll das erste Anschlagelement nicht stationär in der Ultraschallschweißeinrichtung fixiert sein, sondern es wird vorgeschlagen, dass erste Anschlagelement derart verlagerbar auszugestalten, dass es zwischen einer ersten, sogenannten eingefahrenen Position und einer zweiten, sogenannten ausgefahrenen Position bewegt werden kann. In der eingefahrenen Position begrenzt das erste Anschlagelement dabei den Aufnahmeraum an seiner fünften Seite. Dementsprechend kann es in dieser Konfiguration als mechanischer Anschlag für ein oder mehrere Fügepartner dienen, die von der sechsten Seite her in den Aufnahmeraum eingebracht werden. In der ausgefahrenen Position gibt das Anschlagelement die fünfte Seite jedoch zumindest so weit frei, dass auch von der fünften Seite her ein oder mehrere Fügepartner in den Aufnahmeraum eingebracht werden können. Anders ausgedrückt kann das Anschlagelement der hierin beschriebenen Ultraschallschweißeinrichtung selektiv ein- oder ausgefahren werden, abhängig zum Beispiel davon, ob ein Endknoten oder ein Durchgangsknoten geschweißt werden soll. Die eingefahrene Position und die ausgefahrene Position können dabei um mehrere Millimeter bis hin zu einigen Zentimetern, beispielsweise zwischen 2 mm und 10 cm, vorzugsweise zwischen 4 mm und 4 cm, voneinander entfernt sein.

Hierbei weist die Ultraschallschweißeinrichtung ferner die Antriebseinrichtung auf, welche dazu konfiguriert ist, das erste Anschlagelement aktiv zwischen der eingefahrenen Position und der ausgefahrenen Position zu verlagern.

Mit anderen Worten soll die Ultraschallschweißeinrichtung nicht ein lediglich passiv zu bewegendes erstes Anschlagelement aufweisen, welches beispielsweise von einer die Ultraschallschweißeinrichtung bedienenden Person zwischen der eingefahrenen und der ausgefahrenen Position verlagert wird. Stattdessen soll die Ultraschallschweißeinrichtung über eine Antriebseinrichtung verfügen, welche das erste Anschlagelement aktiv von der eingefahrenen Position in die ausgefahrene Position und/oder umgekehrt verlagern kann. Mithilfe einer solchen Antriebseinrichtung kann das Verlagern des ersten Anschlagelements automatisiert werden. Die Antriebseinrichtung kann mit einer Leistungsversorgung verbunden sein. Ferner kann die Antriebseinrichtung mit einer Steuerung verbunden sein oder über eine integrierte Steuerung verfügen, mit der ihr Betrieb gesteuert werden kann.

Insbesondere kann die Antriebseinrichtung gemäß einer konkretisierten Ausführungsform dazu konfiguriert sein, das Anschlagelement mittels eines Elektromotors, mittels einer Hydraulik oder mittels einer Pneumatik zu verlagern.

Beispielsweise kann ein Elektromotor direkt, über ein Getriebe oder über eine andere Mechanik mit dem Anschlagelement gekoppelt sein, um durch entsprechend gerichtetes Betreiben des Elektromotors das Anschlagelement zwischen der eingefahrenen und der ausgefahrenen Position hin und her bewegen zu können. Der Elektromotor kann von einer elektrischen Leistungsversorgung gespeist werden. Die Leistungsversorgung kann bedarfsgerecht gesteuert werden.

Alternativ kann das Anschlagelement mit zu bewegenden Komponenten einer Hydraulik oder einer Pneumatik gekoppelt sein und durch diese zwischen der eingefahrenen und der ausgefahrenen Position bewegt werden. Die Hydraulik bzw. Pneumatik kann mit einem Druckspeicher oder einem Druckgenerator verbunden sein und von diesen mit unter Druck stehender Flüssigkeit bzw. Gas versorgt werden, wobei eine Versorgung eventuell bedarfsgerecht beispielsweise durch Öffnen und Schließen von Ventilen gesteuert werden kann.

Gemäß einer weiteren konkretisierten Ausführungsform ist die Antriebseinrichtung dazu konfiguriert, das erste Anschlagelement zwischen der eingefahrenen Position und der ausgefahrenen Position linear zu verfahren.

Anders ausgedrückt kann die Antriebseinrichtung dazu in der Lage sein, das erste Anschlagelement entlang eines geraden Verfahrwegs von der eingefahrenen in die ausgefahrene Position und/oder umgekehrt zu verlagern. Eine derartige linear wirkende Antriebseinrichtung kann technisch einfach implementiert werden und/oder einen geringen Bauraum einnehmen. Außerdem kann das erste Anschlagelement auf kürzestem Wege zwischen seinen beiden Extremalpositionen verlagert werden. Als Antriebseinrichtung können beispielsweise ein elektrischer Linearantrieb, ein rotierender Elektromotor, bei dem eine Rotation beispielsweise mittels eines Getriebes in eine Linearbewegung umgesetzt wird, ein hydraulisch oder pneumatisch bewegter Kolben oder Ähnliches eingesetzt werden.

Gemäß einer alternativen konkretisierten Ausführungsform ist die Antriebseinrichtung dazu konfiguriert, das erste Anschlagelement zwischen der eingefahrenen Position und der ausgefahrenen Position zu verschwenken.

Mit anderen Worten kann die Antriebseinrichtung dazu ausgestaltet sein, das erste Anschlagelement entlang eines gekrümmten Verfahrwegs zwischen der eingefahrenen und der ausgefahrenen Position zu verlagern. Die Antriebseinrichtung kann hierzu beispielsweise mittels eines Elektromotors, einer Hydraulik oder einer Pneumatik eine Drehbewegung bewirken, welche das mit der Antriebseinrichtung gekoppelte erste Anschlagelement in die eingefahrene Position hinein oder aus der eingefahrenen Position heraus schwenkt.

Gemäß einer von mehreren möglichen erfindungsgemäßen Ausgestaltungen weist die Ultraschallschweißeinrichtung ferner eine Fügepartner-Detektionseinrichtung auf, welche dazu eingerichtet ist, eine Anwesenheit eines Fügepartners in dem Aufnahmeraum zu erkennen und daraufhin ein Erkennungssignal zu erzeugen. Die Antriebseinrichtung kann hierbei dazu konfiguriert sein, abhängig von dem Erkennungssignal das Anschlagelement automatisiert zwischen der eingefahrenen Position und der ausgefahrenen Position zu verlagern.

Die Fügepartner-Detektionseinrichtung kann beispielsweise mit einer Sensorik ausgebildet sein, welche es durch geeignetes Überwachen bestimmter physikalischer Parameter ermöglicht, zu erkennen, ob sich aktuell ein oder mehrere Fügepartner in dem Aufnahmeraum befinden. Die Sensorik kann beispielsweise optische, magnetische, elektrische, mechanische oder andere Parameter überwachen. Möglicherweise kann die Sensorik sogar dazu ausgestaltet sein, zu erkennen, an welcher Position innerhalb des Aufnahmeraums sich ein Fügepartner befindet und/oder in welche Richtung der Fügepartner innerhalb des Aufnahmeraums bewegt wird. Basierend auf einer oder mehreren dieser Informationen kann die Fügepartner-Detektionseinrichtungen dann ein Erkennungssignal erzeugen. Eine die Funktion der Antriebseinrichtung steuernde Steuerung kann dieses Erkennungssignal empfangen und in Reaktion darauf die Antriebseinrichtung geeignet ansteuern. Die Steuerung kann dabei Teil der Antriebseinrichtung sein. Alternativ kann die Antriebseinrichtung dazu ausgestaltet sein, von einer externen Steuerung gesteuert zu werden.

Indem mithilfe der Fügepartner-Detektionseinrichtung die Anwesenheit eines Fügepartners in dem Aufnahmeraum erkannt werden kann, kann die Antriebseinrichtung das Anschlagelement vollautomatisiert oder teilautomatisiert in eine gewünschte Positionen verlagern.

Beispielsweise kann, wenn anfänglich erkannt wird, dass ein Fügepartner von der sechsten Seite her in den Aufnahmeraum eingebracht wurde, zunächst das erste Anschlagelement in seine eingefahrene Position gebracht werden, sodass der Fügepartner an dem ersten Anschlagelement mechanisch anliegend ausgerichtet werden kann. Sobald dies geschehen ist, kann das erste Anschlagelement gegebenenfalls automatisiert zurück in die ausgefahrene Positionen verlagert werden, um es zu ermöglichen, einen oder mehrere weitere Fügepartner von der gegenüberliegenden fünften Seite her in den Aufnahmeraum einzubringen. Auf diese Weise kann schließlich der oder die zuerst eingebrachten Fügepartner mit dem oder den anschließend eingebrachten Fügepartnern zu einem Durchgangsknoten verschweißt werden.

Gemäß einer weiteren von mehreren möglichen erfindungsgemäßen Ausgestaltungen weist die Ultraschallschweißeinrichtung alternativ oder ergänzend eine Mensch-Maschine-Schnittstelle auf, welche dazu eingerichtet ist, basierend auf einer Eingabe durch einen Nutzer Anforderungsdaten zu erzeugen. Die Antriebseinrichtung kann dann dazu konfiguriert sein, abhängig von den Anforderungsdaten das erste Anschlagelement automatisiert zwischen der eingefahrenen Position und der ausgefahrenen Position zu verlagern.

Die Mensch-Maschine-Schnittstelle kann beispielsweise eine Tastatur, ein berührungsempfindlicher Bildschirm, ein Mikrofon mit nachgeschalteter Spracherkennung oder Ähnliches sein. Über die Mensch-Maschine-Schnittstelle kann ein die Ultraschallschweißeinrichtung betreibender Nutzer Daten eingeben, die beispielsweise Informationen über die zu verschweißenden Fügepartner und/oder den zu erzeugenden Schweißknoten wiedergeben können. Beispielsweise kann eingegeben werden, dass zwei Fügepartner zu einem Durchgangsknoten verschweißt werden sollen. Basierend auf der Eingabe kann die Mensch-Maschine-Schnittstelle Anforderungsdaten erzeugen und diese beispielsweise an eine Steuerung übertragen. Die Steuerung kann daraufhin den Betrieb der Antriebseinrichtung vollautomatisiert oder teilautomatisiert steuern, um das erste Anschlagelement in eine gewünschte Position zu fahren.

Wenn beispielsweise bekannt ist, dass ein Durchgangsknoten geschweißt werden soll, kann zuerst das erste Anschlagelement in die eingefahrene Position verlagert werden, um den ersten Fügepartner daran anliegend korrekt positionieren zu können. Anschließend kann das erste Anschlagelement automatisch in die ausgefahrene Position verlagert werden, um den zweiten Fügepartner von der gegenüberliegenden Seite aus in den Aufnahmeraum einbringen zu können.

Gemäß einer Ausführungsform kann die Ultraschallschweißeinrichtung ferner eine Sensorik aufweisen, welche dazu konfiguriert ist, ein Erreichen der eingefahrenen Position durch das erste Anschlagelement zu detektieren und daraufhin ein Eingefahren-Signal zu erzeugen und/oder ein Erreichen der ausgefahrenen Position durch das erste Anschlagelement zu detektieren und daraufhin ein Ausgefahren-Signal zu erzeugen.

Anders ausgedrückt kann eine Sensorik vorgesehen sein, mithilfe derer erkannt werden kann, in welcher Position sich das erste Anschlagelement tatsächlich befindet. Wenn das Anschlagelement die eingefahrene Position tatsächlich erreicht hat, wird von der Sensorik ein spezielles Eingefahren-Signal erzeugt. Wenn das Anschlagelement die ausgefahrene Position tatsächlich erreicht hat, wird von der Sensorik ein spezielles Ausgefahren-Signal erzeugt. Anhand dieser speziellen Signale kann unabhängig von Steuersignalen, mit denen beispielsweise eine Steuerung die Antriebseinrichtung dazu ansteuert, dass erste Anschlagelement an eine bestimmte Position zu fahren, erkannt werden, ob das erste Anschlagelement die angesteuerte Position tatsächlich erreicht. Hierdurch können gegebenenfalls Fehlfunktionen bei der Ansteuerung der Antriebseinrichtung und/oder bei der resultierenden Verlagerung des Anschlagelements erkannt werden.

Gemäß einer Ausführungsform kann die Ultraschallschweißeinrichtung ferner eine Führung aufweisen, um das erste Anschlagelement bei einer Verlagerungsbewegung zwischen der eingefahrenen Position und der ausgefahrenen Position zu führen.

Die Führung kann das erste Anschlagelement während seiner Verlagerungsbewegung derart führen, dass es entlang eines gewünschten Verlagerungsweges, d.h. beispielsweise entlang des kürzesten Weges zwischen der ausgefahrenen Position und der eingefahrenen Position, weitgehend kräftefrei bewegt werden kann, quer zu dem Verlagerungsweg jedoch gestützt wird und somit den Verlagerungsweg ohne Einwirken übermäßiger Kräfte nicht verlassen kann. Die Führung kann beispielsweise dabei helfen, zu vermeiden, dass das Anschlagelement und/oder die damit gekoppelte Antriebseinrichtung beispielsweise bei falscher Handhabung durch einen Nutzer und/oder dadurch, dass Fügepartner mit zu hohen Kräften gegen das Anschlagelement gedrückt werden, beschädigt werden.

Gemäß einer besonders einfach zu realisierenden Ausführungsform kann das erste Anschlagselement den Aufnahmeraum mit einer einzelnen Platte begrenzen.

Anders ausgedrückt kann das erste Anschlagelement einstückig und flächig als Platte ausgestaltet sein. Abmessungen und/oder Material der Platte können dabei derart gewählt sein, dass die Platte einerseits ausreichend stabil ist, um den beim Ausrichten von Fügepartnern an dem ersten Anschlagelement auftretenden Kräften standzuhalten, die Platte andererseits jedoch ausreichend leicht bleibt, um einfach verlagert werden zu können.

Gemäß einer weiter entwickelten Ausführungsform kann die Ultraschallschweißeinrichtung ferner ein zweites Anschlagelement aufweisen. Das zweite Anschlagelement kann zwischen einer eingefahrenen Position und einer ausgefahrenen Position verlagerbar sein. Das zweite Anschlagelement soll in der eingefahrenen Position den Aufnahmeraum an einer sechsten, quer zu den ersten bis vierten Seiten verlaufenden und der fünften Seite gegenüberliegenden Seite zumindest bereichsweise begrenzen und in der ausgefahrenen Position den Aufnahmeraum an der sechsten Seite offen lassen.

Das zweite Anschlagelement kann somit auf der entgegengesetzten Seite zu dem ersten Anschlagelement angeordnet sein, sodass beide Anschlagelemente zwischen sich den Aufnahmeraum begrenzen. Das erste Anschlagelement kann dabei dazu dienen, von der sechsten Seite her in den Aufnahmeraum eingeführte Fügepartner so zu positionieren, dass sie an dem ersten Anschlagelement anliegen und somit direkt bis an den dortigen Rand des Aufnahmeraums heranreichen, nicht aber über diesen hinausragen. Das zweite Anschlagelement hingegen kann dazu eingesetzt werden, eine ähnliche Aufgabe für von der entgegengesetzten fünften Seite her eingefügte Fügepartner zu übernehmen, d.h. diese durch stirnseitiges Anlegen an das zweite Anschlagelement derart zu positionieren, dass sie bis an den gegenüberliegenden Rand des Aufnahmeraums heranreichen, nicht aber über diesen hinausragen. Mithilfe der beiden Anschlagelemente können somit Fügepartner nacheinander von beiden gegenüberliegenden Seiten her in dem Aufnahmeraum aufgenommen und geeignet in diesem positioniert werden, um nach dem Ultraschallschweißvorgangs einen qualitativ hochwertigen Durchgangsknoten zu bilden.

Das zweite Anschlagelement soll dabei ähnlich wie das erste Anschlagelement zwischen einer eingefahrenen Position und einer ausgefahrenen Position verlagerbar sein. Dementsprechend kann das zweite Anschlagelement, während das erste Anschlagelement an seiner eingefahrenen Position angeordnet ist, in seine ausgefahrene Position verlagert sein, sodass die sechste Seite des Aufnahmeraums geöffnet ist und von dort her kommend ein oder mehrere Fügepartner in den Aufnahmeraum eingeschoben werden können, bis sie am ersten Anschlagelement anliegen. Anschließend kann das erste Anschlagelement in seine ausgefahrene Position verlagert werden und das zweite Anschlagelement in seine eingefahrene Position gebracht werden. In dieser Konfiguration ist dann die fünfte Seite des Aufnahmeraums offen, sodass ein oder mehrere Fügepartner von dort her kommend in den Aufnahmeraum eingeschoben werden können, bis sie am zweiten Anschlagelement anliegen. Das Verlagern des ersten und des zweiten Anschlagelements kann unabhängig voneinander oder in Abhängigkeit von einander erfolgen. Es kann ferner voll- oder teilautomatisiert erfolgen.

Gemäß einer konkretisierten Ausführungsform kann hierbei das zweite Anschlagelement mehrere längliche Segmente aufweisen, welche sich jeweils in einer Richtung entlang der sechsten Seite und parallel zueinander erstrecken. Jedes der Segmente kann dabei unabhängig von benachbarten Segmenten zwischen der eingefahrenen Position und der ausgefahrenen Position verlagerbar sein.

Mit anderen Worten kann das zweite Anschlagelement vorzugsweise mehrstückig ausgebildet sein. Eine von dem zweiten Anschlagelement gebildete Begrenzung des Aufnahmeraums an dessen sechster Seite kann hierbei aus mehreren Segmenten zusammengesetzt sein. Jedes einzelne Segment kann länglich ausgebildet sein und sich entlang der sechsten Seite bzw. in deren Verlängerung oder parallel zu dieser erstrecken. Die verschiedenen Segmente können sich dabei parallel zueinander erstrecken und somit, wenn sie in ihre eingefahrene Positionen verlagert sind, mit ihren Oberflächen die sechste Seite des Aufnahmeraums zumindest bereichsweise abdecken.

Die Segmente können unabhängig voneinander zwischen der eingefahrenen Position und der ausgefahrenen Position verlagert werden. Anders ausgedrückt kann jedes der Segmente in seiner Längserstreckungsrichtung unabhängig von benachbarten Segmenten verlagert werden. Dementsprechend können einige der Segmente beispielsweise in ihrer ausgefahrenen Position verharren, während andere der Segmente in ihre eingefahrene Position verlagert werden oder in eine dazwischenliegende Position.

Durch diesen segmentartigen Aufbau des zweiten Anschlagelements kann bewirkt werden, dass die von ihm zu realisierende Begrenzung an der sechsten Seite des Aufnahmeraums bei Bedarf nicht die gesamte sechste Seite, sondern nur Teile derselben, abdecken kann. Dies kann vorteilhaft sein, wenn beispielsweise zuvor Fügepartner von der sechsten Seite her kommend in dem Aufnahmeraum positioniert wurden, sodass der Aufnahmeraum an seiner sechsten Seite nicht mehr vollständig verschlossen werden kann. In diesem Fall können diejenigen Segmente, welche einen Teilbereich der sechsten Seite abdecken würden, aus dem die bereits eingebrachten Fügepartner nach außen heraus verlaufen, in ihrer ausgefahrenen Position verbleiben, wohingegen die anderen Segmente einen angrenzenden Teilbereich der sechsten Seite abdecken können, indem sie in ihre eingefahrene Position verlagert werden. Die in die eingefahrene Position verlagerten Segmente können dann einen physischen Anschlag für von der gegenüberliegenden fünften Seite her eingebrachte Fügepartner bilden.

Gemäß einer weiter konkretisierten Ausführungsform können bei einem solchen segmentartig aufgebauten zweiten Anschlagelement zumindest einige der Segmente jeweils elastisch an einem jeweils zugehörigen Segmentbewegungselement gehalten sein, sodass sie, wenn sie hin zu der eingefahrenen Position kraftbeaufschlagt sind, elastisch hin zu der eingefahrenen Position vorgespannt sind.

Mit anderen Worten kann jedes der Segmente des zweiten Anschlagelements von einem zugeordneten Segmentbewegungselement hin zu der eingefahrenen Position und zurück zu der ausgefahrenen Position bewegt werden. Das Segment ist dabei jedoch nicht starr mit dem Segmentbewegungselement gekoppelt, sondern elastisch an diesem gehalten. Wenn das Segmentbewegungselement in Richtung der eingefahrenen Position bewegt wird, nimmt es das Segment, solange keine Gegenkraft auf das Segment wirkt, ungehindert mit hin zu der eingefahrenen Position. Das Segment ist dabei hin zu der eingefahrenen Position elastisch vorgespannt. Dies bedeutet, wenn eine Gegenkraft in Richtung hin zu der ausgefahrenen Position auf das Segment wirkt, kann das Segment entgegen dieser elastischen Vorspannung hin zu der ausgefahrenen Position verlagert werden. Auch für den Fall, dass das Segmentbewegungselement hin zu der eingefahrenen Position bewegt wird, aber das mit ihm elastisch gekoppelte Segment auf dem Weg zu der eingefahrenen Position auf ein Hindernis stößt, welches eine entgegengerichtete Kraft auf das Segment ausübt, kann das Segmentbewegungselement weiter in Richtung hin zu der eingefahrenen Position bewegt werden, dass Segment jedoch trotz sukzessive zunehmender elastischer Vorspannung an seiner ursprünglichen Position verharren.

In einer solchen Ausgestaltung kann versucht werden, das zweite Anschlagelement beispielsweise mit all seinen Segmenten hinzu der eingefahrenen Position zu verlagern. Hierzu können alle Segmentbewegungselemente in der Richtung hin zu der eingefahrenen Position verlagert werden. Allerdings werden nur diejenigen Segmente des zweiten Anschlagelements tatsächlich hin zur eingefahrenen Position verlagert, die auf dem Weg dorthin nicht auf ein Hindernis stoßen. Ein solches Hindernis kann insbesondere von zuvor bereits in dem Aufnahmeraum angeordneten Fügepartnern gebildet werden. Im Resultat kann sich das zweite Anschlagelement quasi selbsttätig an die in dem Aufnahmeraum zuvor bewirkte Bestückung mit Fügepartnern anpassen, indem nur diejenigen Segmente tatsächlich in die eingefahrene Position verlagert werden, die nicht von Fügepartnern, die aus dem Aufnahmeraum an der sechsten Seite heraus verlaufen, blockiert werden.

Gemäß einer Ausführungsform kann die Ultraschallschweißeinrichtung ferner eine Antriebseinrichtung zum Antreiben des zweiten Anschlagsegments, eine weitere Fügepartner-Detektionseinrichtung zum Erkennen von Fügepartnern in dem Aufnahmeraum nahe dem zweiten Anschlagsegment, eine Sensorik zum Erkennen einer aktuellen Position des zweiten Anschlagelements und/oder eine Führung zum Führen einer Verlagerungsbewegung des zweiten Anschlagelements aufweisen.

Die genannten Einrichtungen bzw. Komponenten können dabei in analoger Weise ausgestaltet sein, wie dies weiter oben im Zusammenhang mit dem ersten Anschlagelement beschrieben wurde.

Es wird darauf hingewiesen, dass mögliche Merkmale und Vorteile von Ausführungsformen der Erfindung hierin teilweise mit Bezug auf eine erfindungsgemäß ausgestaltete Ultraschallschweißeinrichtung und teilweise mit Bezug auf eine Art und Weise, wie diese betrieben oder verwendet werden kann, beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine stark schematisierte Seitenansicht auf eine Ultraschallschweißeinrichtung gemäß einer Ausführungsform der vorliegenden Erfindung.
Fig. 2 zeigt eine perspektivische Ansicht auf eine Ultraschallschweißeinrichtung gemäß einer Ausführungsform der vorliegenden Erfindung mit einem ersten Anschlagelement in seiner eingefahrenen Position.
Fig. 3 zeigt eine perspektivische Ansicht auf eine Ultraschallschweißeinrichtung gemäß einer Ausführungsform der vorliegenden Erfindung mit einem ersten Anschlagelement in seiner ausgefahrenen Position.
Fig.4 zeigt eine perspektivische Ansicht auf eine Ultraschallschweißeinrichtung gemäß einer Ausführungsform der vorliegenden Erfindung mit einem zusätzlichen zweiten Anschlagelement in seiner zumindest bereichsweise eingefahrenen Position.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

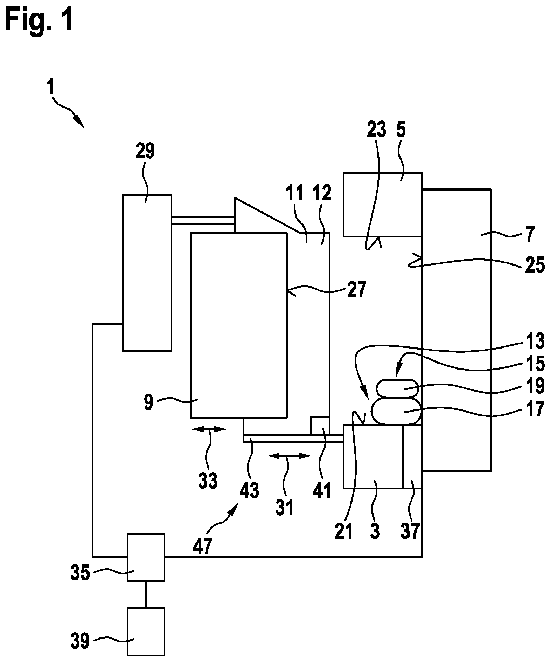

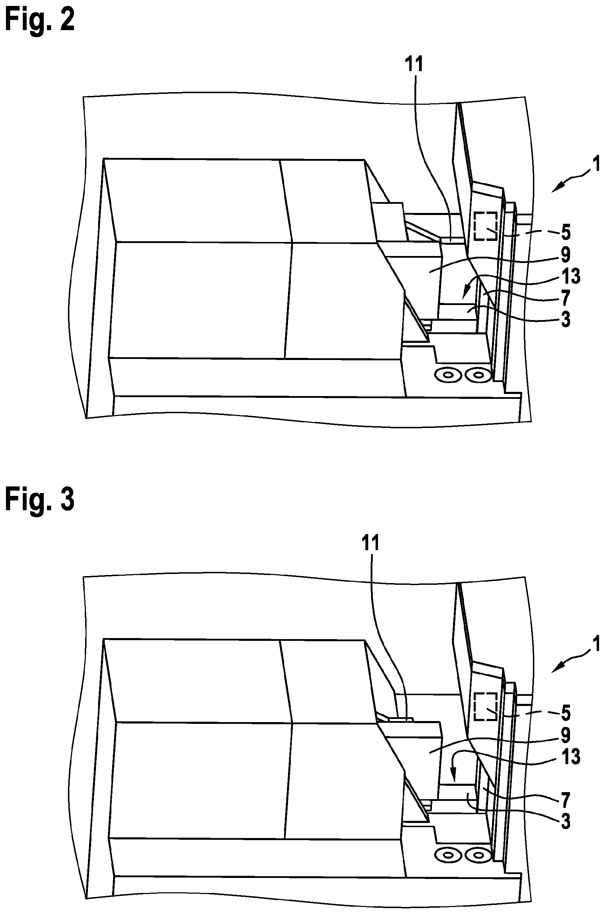

Fig. 1 zeigt eine in einer stark schematisierten Weise eine Ultraschallschweißeinrichtung 1 gemäß einer Ausführungsform der vorliegenden Erfindung. Die Ultraschallschweißeinrichtung 1 ist in einer konkreten Ausgestaltung in perspektivische Ansicht und bezüglich einiger Hauptkomponenten mit etwas mehr Details auch in Fig. 2 und Fig. 3 dargestellt.

Die Ultraschallschweißeinrichtung 1 weist eine Sonotrode 3, einen Amboss 5, ein Touchierelement 7 und einen Seitenschieber 9 auf. Die genannten Komponenten umgeben rahmenartig einen Aufnahmeraum 13, in dem Fügepartner 15 wie beispielsweise eine erste Litze 17 eines ersten Kabels und eine zweite Litze 19 eines zweiten Kabels aufgenommen sein können. Eine erste Seite (im dargestellten Beispiel unten) des Aufnahmeraums 13 wird dabei von einer Oberfläche 21 der Sonotrode 3 begrenzt. Eine der ersten Seite gegenüberliegende zweite Seite (im dargestellten Beispiel oben) des Arbeitsraums 13 wird von einer Oberfläche 23 des Amboss 5 begrenzt. Eine dritte Seite (im dargestellten Beispiel rechts) des Aufnahmeraums 13 wird von einer Oberfläche 25 des Touchierelements 7 begrenzt. Und eine der dritten Seite gegenüberliegende vierte Seite (im dargestellten Beispiel links) des Aufnahmeraums 13 wird von einer Oberfläche 27 des Seitenschiebers 9 begrenzt. Im dargestellten Beispiel verlaufen die Oberflächen 21 und 23 der Sonotrode 3 und des Amboss 5 jeweils horizontal und parallel zueinander, wohingegen die Oberflächen 25 und 27 des Touchierelements 7 und des Seitenschiebers 9 jeweils vertikal und wiederum parallel zueinander verlaufen. Der von den genannten Oberflächen 21, 23, 25, 27 begrenzte Aufnahmeraum 13 ist somit näherungsweise quaderförmig.

Wie in den perspektivisch dargestellten Figuren 2 und 3 gut zu erkennen, ist hinter dem Seitenschieber 9 ein erstes Anschlagelement 11 vorgesehen. Dieses erste Anschlagelement 11 kann, wie in Fig. 2 dargestellt, in einer eingefahrenen Position angeordnet sein, bei der es den Aufnahmeraum 13 an einer fünften Seite (im dargestellten Beispiel hinten) begrenzt. Bei Bedarf kann das erste Anschlagelement 11, wie in Fig. 3 dargestellt, in eine ausgefahrene Position verlagert werden, bei der es den Aufnahmeraum 13 an der fünften Seite offen lässt.

Aus Übersichtlichkeitsgründen sind in den Fign. 2 und 3 nur einige der Hauptkomponenten der Ultraschallschweißeinrichtung dargestellt, einige der nachfolgend erläuterten optionalen Komponenten sind jedoch nur in Fig. 1 schematisch veranschaulicht und in Fig. 2 und 3 weggelassen.

Das erste Anschlagelement 11 kann mithilfe einer Antriebseinrichtung 29 entlang einer Verlagerungsrichtung 31 zwischen der eingefahrenen Position und der ausgefahrenen Position verlagert werden. Hierfür kann die Antriebseinrichtung 29 von einer Steuerung 35 gesteuert werden. Die Steuerung 35 kann als separate Komponente oder integriert in die Antriebseinrichtung 29 ausgebildet sein.

Die Steuerung 35 kann beispielsweise mit einer Fügepartner-Detektionseinrichtung 37 kommunizieren und von dieser ein Erkennungssignal erhalten, sobald eine Anwesenheit von einem oder mehreren Fügepartnern 15 in dem Aufnahmeraum 13 detektiert wurde. Daraufhin kann die Steuerung 35 die Antriebseinrichtung 29 automatisiert dazu ansteuern, das erste Anschlagelement 11 in seine eingefahrene Position zu verlagern. Dementsprechend können die an der sechsten Seite in den Aufnahmeraum 13 eingeführten Fügepartner 15 dann mit ihrer Stirnseite bis an das erste Anschlagelement 11 herangeführt werden und somit in etwa mit dem Rand der Sonotrode 3 an der fünften Seite des Aufnahmeraums 13 ausgerichtet werden.

Ergänzend oder alternativ kann die Steuerung 35 mit einer Mensch-Maschine-Schnittstelle 39 kommunizieren, über welche ein Bediener Eingaben eingeben kann. Diese Eingaben können zum Beispiel angeben, welche Art von Kontaktknoten erzeugt werden soll, welche Eigenschaften die zu verschweißenden Fügepartner 15 haben, etc. Basierend auf diesen Eingaben können Anforderungsdaten an die Steuerung 35 übermittelt werden, welche daraufhin die Antriebseinrichtung automatisiert dazu ansteuern kann, das erste Anschlagelement 11 an eine geeignete Position, d.h. insbesondere an die eingefahrene oder die ausgefahrene Position, zu verlagern.

Die Ultraschallschweißeinrichtung 1 umfasst optional ferner eine Sensorik 41, mithilfe derer detektiert werden kann, wenn das erste Anschlagelement 11 seine eingefahrene Position oder seine ausgefahrene Position tatsächlich erreicht. Die Sensorik 41 kann hieraufhin ein Eingefahren-Signal bzw. ein Ausgefahren-Signal erzeugen. Diese Signale können wiederum an die Steuerung 35 weitergeleitet werden, welche dadurch eine Rückmeldung über eine aktuelle tatsächliche Position des ersten Anschlagelements 11 erhält. Die Signale können somit beispielsweise zum Regeln eines Betriebs der Antriebseinrichtung 29 eingesetzt werden.

Um zu vermeiden, dass das erste Anschlagelement 11 bei seiner Verlagerung zwischen der ausgefahrenen und der eingefahrenen Position von einem gewünschten Verlagerungspfad abkommt, ist ferner eine Führung 47 vorgesehen. Im dargestellten Beispiel ist die Führung 47 mit einer Führungsschiene 43, welche eine untere Kante des im Beispiel als einstückige Platte ausgestalteten ersten Anschlagelements 11 führt, ausgestaltet.

Unabhängig von einer Bewegung des ersten Anschlagelements 11 kann auch der Seitenschieber 9 in einer Verlagerungsrichtung 33 verlagert werden, um den Aufnahmeraum 13 nach dem Einlegen der Fügepartner 15 verkleinern und damit die Fügepartner 15 in einer gewünschten Positionierung halten zu können.

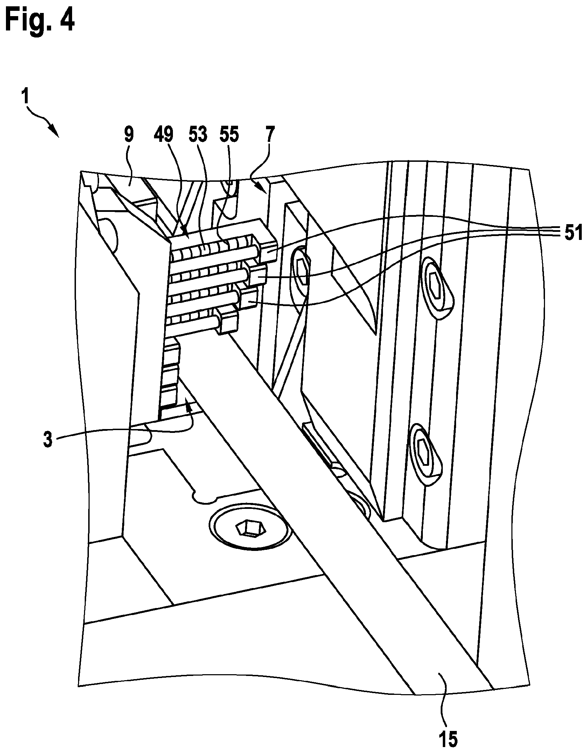

Fig. 4 veranschaulicht eine Konfiguration der Ultraschallschweißeinrichtung 1, bei der ein zweites Anschlagelement 49 zumindest bereichsweise in seine eingefahrene Position verlagert wurde. Das zweite Anschlagelement 49 erstreckt sich angrenzend an den Aufnahmeraum 13 an der der fünften Seite gegenüberliegenden sechsten Seite. Somit kann das zweite Anschlagelement 49 als mechanischer Anschlag für Fügepartner 15 dienen, die von der fünften Seite her in den Aufnahmeraum 13 eingeführt wurden.

Das zweite Anschlagelement 49 ist dabei nicht wie das erste Anschlagelement 11 als einfache einstückige Platte ausgestaltet, sondern verfügt über mehrere längliche Segmente 51. Die Segmente 51 können unabhängig voneinander in die eingefahrene und/oder die ausgefahrene Position verlagert werden. Hierzu ist jedes der Segmente 51 mit einem Segmentbewegungselement 53 gekoppelt, dass von einer Antriebseinrichtung (nicht dargestellt) verlagert werden kann. Das Segmentbewegungselement 53 überträgt eine Bewegung der Antriebseinrichtung jedoch nicht starr auf das zugehörige Segment 51. Stattdessen ist das Segment 51 über eine Feder 55 mit dem Segmentbewegungselement 53 gekoppelt. Auf diese Weise kann erreicht werden, dass das jeweilige Segment 51, wenn es von seinem Segmentbewegungselement 53 hin zu der eingefahrenen Position kraftbeaufschlagt wird, zwar hin zu der eingefahrenen Position elastisch vorgespannt wird, sich aber nicht tatsächlich zwingend hinzu der eingefahrenen Position bewegt. Stattdessen können Segmente 51, die bei einer Bewegung hin zu der eingefahrenen Position auf ein Hindernis wie beispielsweise im Aufnahmeraum 13 angeordnete Fügepartner 15 treffen, von diesem Hindernis aufgehalten werden. Diese Segmente 51 drücken dann elastisch vorgespannt auf das Hindernis. Dies kann dazu genutzt werden, bereits in dem Aufnahmeraum 13 angeordnete Fügepartner 15 temporär zu fixieren. Dies ist in Fig. 4 für die unteren drei Segmente 51 dargestellt. Diejenigen Segmente 51, die auf kein Hindernis stoßen, werden hin zu der eingefahrenen Position verlagert. Sie bilden dann dort eine Begrenzung des Aufnahmeraums 13, an der von der entgegengesetzten Seite eingeführte Fügepartner mechanisch anliegen und somit ausgerichtet werden können. Dies ist in Fig. 4 für die oberen vier Segmente 51 dargestellt.

Mit teilweise anderer Wortwahl zusammengefasst sind das erste und/oder das zweite Anschlagelement 11, 49 in die Ultraschallschweißeinrichtung 1 integriert und können je nach Knotenparameter automatisch beispielsweise durch einen mithilfe einer Software gesteuerten Antrieb eingefahren bzw. ausgefahren werden (zum Beispiel elektrisch oder pneumatisch). Dies ist sowohl für Endknoten als auch für Durchgangsknoten möglich, sofern für letzteren Fall zwei Anschlagelemente 11, 49 vorgesehen werden. Das zweite Anschlagelement 49 besteht vorzugsweise aus mehreren federbelasteten verschiebbaren Segmenten, die nur an denjenigen Stellen, die nicht durch bereits zuvor eingelegte Fügepartner 15 belegt sind, komplett ausfahren. Somit entsteht nur ein Anschlag für die von einer entgegengesetzten Seite (links) einzulegenden Fügepartner 15.

Mit Ausführungsformen der hierin vorgeschlagenen Ultraschallschweißeinrichtung 1 können Stillstandszeiten, welche herkömmlich beispielsweise zum Einbauen oder Ausbauen eines separaten Anschlags benötigt wurden, reduziert werden und/oder eine gleichbleibende Qualität bei Schweißungen erreicht werden. Außerdem ist die Ultraschallschweißeinrichtung 1 gegebenenfalls sowohl für ein Ausbilden von Endknoten als auch für ein Ausbilden von Durchgangsknoten mit jeweiligem Anschlag einsetzbar. Schwankende Qualitäten beim erzeugten Endprodukt, wie sie herkömmlich aufgrund ungenauer Einlegepositionen betreffend die in dem Aufnahmeraum eingelegten Fügepartner entstehen können, können mit der vorgeschlagenen Ultraschallschweißeinrichtung 1 weitgehend vermieden werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Ultraschweißeinrichtung
- 3: Sonotrode
- 5: Amboss
- 7: Touchierelement
- 9: Seitenschieber
- 11: erstes Anschlagelement
- 12: Platte
- 13: Aufnahmeraum
- 15: Fügepartner
- 17: erste Litze
- 19: zweite Litze
- 21: Oberfläche der Sonotrode
- 23: Oberfläche des Amboss
- 25: Oberfläche des Touchierelements
- 27: Oberfläche des Seitenschiebers
- 29: Antriebseinrichtung
- 31: Verlagerungsrichtung des ersten Anschlagelements
- 33: Verlagerungsrichtung des Seitenschiebers
- 35: Steuerung
- 37: Fügepartner-Detektionseinrichtung
- 39: Mensch-Maschine-Schnittstelle
- 41: Sensorik
- 43: Führungsschiene
- 47: Führung
- 49: zweites Anschlagelement
- 51: Segmente
- 53: Segmentbewegungselement
- 55: Federn

## Patentansprüche

1. Ultraschallschweißeinrichtung (1), aufweisend:
eine Sonotrode (3);
einen Amboss (5);
ein Touchierelement (7);
einen Seitenschieber (9);
ein erstes Anschlagelement (11); und
einen Aufnahmeraum (13), in welchem Fügepartner (15) aufzunehmen sind;
wobei der Aufnahmeraum an einer ersten Seite von einer Oberfläche (21) der Sonotrode und an einer der ersten Seite gegenüberliegenden zweiten Seite von einer Oberfläche (23) des Amboss begrenzt wird;
wobei der Aufnahmeraum ferner an einer dritten Seite von einer Oberfläche (25) des Touchierelements und an einer der dritten Seite gegenüberliegenden vierten Seite von einer Oberfläche (27) des Seitenschiebers begrenzt wird;
wobei das erste Anschlagelement zwischen einer eingefahrenen Position und einer ausgefahrenen Position verlagerbar ist;
wobei das erste Anschlagelement in der eingefahrenen Position den Aufnahmeraum an einer fünften, quer zu den ersten bis vierten Seiten verlaufenden Seite begrenzt und in der ausgefahrenen Position den Aufnahmeraum an der fünften Seite offen lässt;
**dadurch gekennzeichnet**, das
die Ultraschallschweißeinrichtung ferner aufweist:
eine Antriebseinrichtung (29), welche dazu konfiguriert ist, das erste Anschlagelement aktiv zwischen der eingefahrenen Position und der ausgefahrenen Position zu verlagern, und wobei die Ultraschallschweißeinrichtung ferner aufweist:
(i) eine Fügepartner-Detektionseinrichtung (37), welche dazu eingerichtet ist, eine Anwesenheit eines Fügepartners in dem Aufnahmeraum zu erkennen und daraufhin ein Erkennungssignal zu erzeugen, wobei die Antriebseinrichtung dazu konfiguriert ist, abhängig von dem Erkennungssignal das Anschlagelement automatisiert zwischen der eingefahrenen Position und der ausgefahrenen Position zu verlagern, wobei eine Steuerung dazu konfiguriert ist, das Erkennungssignal zu empfangen und in Reaktion darauf die Antriebseinrichtung geeignet anzusteuern, und/oder
(ii) eine Mensch-Maschine-Schnittstelle (39), welche dazu eingerichtet ist, basierend auf einer Eingabe durch einen Nutzer Anforderungsdaten zu erzeugen,
wobei die Antriebseinrichtung dazu konfiguriert ist, abhängig von den Anforderungsdaten das erste Anschlagelement automatisiert zwischen der eingefahrenen Position und der ausgefahrenen Position zu verlagern, wobei eine Steuerung dazu konfiguriert ist, die Anforderungsdaten zu empfangen und in Reaktion darauf die Antriebseinrichtung geeignet anzusteuern.

2. Ultraschallschweißeinrichtung nach Anspruch 1,
wobei die Antriebseinrichtung dazu konfiguriert ist, das Anschlagelement mittels eines Elektromotors, mittels einer Hydraulik oder mittels einer Pneumatik zu verlagern.

3. Ultraschallschweißeinrichtung nach einem der vorangehenden Ansprüche, wobei die Antriebseinrichtung dazu konfiguriert ist, das erste Anschlagelement zwischen der eingefahrenen Position und der ausgefahrenen Position linear zu verfahren.

4. Ultraschallschweißeinrichtung nach einem der Ansprüche 1 und 2,
wobei die Antriebseinrichtung dazu konfiguriert ist, das erste Anschlagelement zwischen der eingefahrenen Position und der ausgefahrenen Position zu verschwenken.

5. Ultraschallschweißeinrichtung nach einem der vorangehenden Ansprüche, ferner aufweisend eine Sensorik (41), welche dazu konfiguriert ist, ein Erreichen der eingefahrenen Position durch das erste Anschlagelement zu detektieren und daraufhin ein Eingefahren-Signal zu erzeugen und/oder ein Erreichen der ausgefahrenen Position durch das erste Anschlagelement zu detektieren und daraufhin ein Ausgefahren-Signal zu erzeugen.

6. Ultraschallschweißeinrichtung nach einem der vorangehenden Ansprüche, ferner aufweisend eine Führung (47), um das erste Anschlagelement bei einer Verlagerungsbewegung zwischen der eingefahrenen Position und der ausgefahrenen Position zu führen.

7. Ultraschallschweißeinrichtung nach einem der vorangehenden Ansprüche, wobei das erste Anschlagselement den Aufnahmeraum mit einer einzelnen Platte (12) begrenzt.

8. Ultraschallschweißeinrichtung nach einem der vorangehenden Ansprüche, ferner aufweisend ein zweites Anschlagelement (49), wobei das zweite Anschlagelement zwischen einer eingefahrenen Position und einer ausgefahrenen Position verlagerbar ist, wobei das zweite Anschlagelement in der eingefahrenen Position den Aufnahmeraum an einer sechsten, quer zu den ersten bis vierten Seiten verlaufenden und der fünften Seite gegenüberliegenden Seite zumindest bereichsweise begrenzt und in der ausgefahrenen Position den Aufnahmeraum an der sechsten Seite offen lässt.

9. Ultraschallschweißeinrichtung nach Anspruch 8,
wobei das zweite Anschlagelement mehrere längliche Segmente (51) aufweist, welche sich jeweils in einer Richtung entlang der sechsten Seite und parallel zueinander erstrecken,
wobei jedes der Segmente unabhängig von benachbarten Segmenten zwischen der eingefahrenen Position und der ausgefahrenen Position verlagerbar ist.

10. Ultraschallschweißeinrichtung nach Anspruch 9, wobei zumindest einige der Segmente jeweils elastisch an einem jeweils zugehörigen Segmentbewegungselement (53) gehalten sind, sodass sie, wenn sie hin zu der eingefahrenen Position kraftbeaufschlagt sind, elastisch hin zu der eingefahrenen Position vorgespannt sind.

11. Ultraschallschweißeinrichtung nach einem der Ansprüche 8 bis 10, ferner aufweisend eine Antriebseinrichtung zum Antreiben des zweiten Anschlagsegments, eine Fügepartner-Detektionseinrichtung zum Erkennen von Fügepartnern in dem Aufnahmeraum nahe dem zweiten Anschlagsegment, eine Sensorik zum Erkennen einer aktuellen Position des zweiten Anschlagelements und/oder eine Führung zum Führen einer Verlagerungsbewegung des zweiten Anschlagelements.

## Claims

1. Ultrasonic welding device (1), comprising:
a sonotrode (3);
an anvil (5);
a touching element (7);
a lateral slide (9);
a first stop element (11); and
a receiving chamber (13) in which joining partners (15) are to be received;
wherein the receiving chamber is defined on a first side by a surface (21) of the sonotrode and on a second side opposing the first side by a surface (23) of the anvil;
wherein the receiving chamber is further defined on a third side by a surface (25) of the touching element and on a fourth side opposing the third side by a surface (27) of the lateral slide;
wherein the first stop element is displaceable between a pulled-in position and a pulled-out position;
wherein the first stop element in the pulled-in position defines the receiving chamber on a fifth side extending transverse to the first to fourth sides and in the pulled-out position leaves the receiving chamber open on the fifth side;
**characterized in that**
the ultrasonic welding device further comprises:
a drive device (29) which is configured to actively displace the first stop element between the pulled-in position and the pulled-out position,
and wherein the ultrasonic welding device further comprises:
(i) a joining partner detection device (37) which is adapted to detect a presence of a joining partner in the receiving chamber and then to generate a detection signal, wherein the drive device is configured to displace the stop element between the pulled-in position and the pulled-out position in an automated manner in dependence on the detection signal, wherein a controller is configured to receive the detection signal and to suitably control the drive device in reaction thereto, and/or
(ii) a human-machine interface (39) which is adapted to generate request data on the basis of an input by a user,
wherein the drive device is configured to displace the first stop element between the pulled-in position and the pulled-out position in an automated manner in dependence on the request data, wherein a controller is configured to receive the request data and to suitably control the drive device in reaction thereto,.

2. Ultrasonic welding device according to claim 1,
wherein the drive device is configured to displace the stop element by means of an electric motor, by means of a hydraulic system or by means of a pneumatic system.

3. Ultrasonic welding device according to one of the preceding claims,
wherein the drive device is configured to displace the first stop element linearly between the pulled-in position and the pulled-out position.

4. Ultrasonic welding device according to one of preceding claims 1 and 2, wherein the drive device is configured to pivot the first stop element between the pulled-in position and the pulled-out position.

5. Ultrasonic welding device according to one of the preceding claims,
further comprising a sensor system (41) which is configured to detect that the first stop element has reached the pulled-in position and then to generate a pulled-in signal and/or to detect that the first stop element has reached the pulled-out position and then to generate a pulled-out signal.

6. Ultrasonic welding device according to one of the preceding claims,
further comprising a guide (47) for guiding the first stop element during a displacement movement between the pulled-in position and the pulled-out position.

7. Ultrasonic welding device according to one of the preceding claims,
wherein the first stop element defines the receiving chamber with a single plate (12).

8. Ultrasonic welding device according to one of the preceding claims,
further comprising a second stop element (49), wherein the second stop element is displaceable between a pulled-in position and a pulled-out position, wherein the second stop element in the pulled-in position defines the receiving chamber at least in some regions on a sixth side extending transverse to the first to fourth sides and opposing the fifth side and in the pulled-out position leaves the receiving chamber open on the sixth side.

9. Ultrasonic welding device according to claim 8,
wherein the second stop element comprises a plurality of elongate segments (51) which each extend in a direction along the sixth side and parallel to each other,
wherein each of the segments is displaceable between the pulled-in position and the pulled-out position independently of adjacent segments.

10. Ultrasonic welding device according to claim 9, wherein at least some of the segments are each elastically held on a respective associated segment-moving element (53) so that, when they are force-actuated toward the pulled-in position, they are elastically biased toward the pulled-in position.

11. Ultrasonic welding device according to one of claims 8 to 10, further comprising a drive device for driving the second stop element, a joining partner detection device for detecting joining partners in the receiving chamber close to the second stop element, a sensor system for detecting a current position of the second stop element, and/or a guide for guiding a displacement movement of the second stop element.

## Revendications

1. Dispositif de soudage par ultrasons (1) comprenant :
une sonotrode (3) ;
une enclume (5) ;
un élément de contact (7) ;
un coulisseau latéral (9) ;
un premier élément de butée (11) ; et
un espace de réception (13) dans lequel des partenaires d'assemblage (15) doivent être reçus ;
dans lequel l'espace de réception est délimité sur un premier côté par une surface (21) de la sonotrode et sur un deuxième côté opposé au premier côté par une surface (23) de l'enclume ;
dans lequel l'espace de réception est en outre délimité sur un troisième côté par une surface (25) de l'élément de contact et sur un quatrième côté opposé au troisième côté par une surface (27) du coulisseau latéral ;
dans lequel le premier élément de butée peut être déplacé entre une position rétractée et une position étendue ;
dans lequel, dans la position rétractée, le premier élément de butée délimite l'espace de réception au niveau d'un cinquième côté transversal aux premier à quatrième côtés et, dans la position étendue, laisse l'espace de réception ouvert au niveau du cinquième côté;
**caractérisé en ce que**
le dispositif de soudage par ultrasons comprend en outre :
un dispositif d'entraînement (29) qui est configuré pour déplacer activement le premier élément de butée entre la position rétractée et la position étendue,
et dans lequel le dispositif de soudage par ultrasons comprend en outre :
(i) un dispositif de détection de partenaire d'assemblage (37) qui est conçu pour détecter une présence d'un partenaire d'assemblage dans l'espace de réception et pour générer ensuite un signal de détection, dans lequel le dispositif d'entraînement est configuré pour déplacer automatiquement l'élément de butée entre la position rétractée et la position étendue en fonction du signal de détection, dans lequel une commande est configurée pour recevoir le signal de détection et pour commander de manière appropriée le dispositif d'entraînement en réponse à celui-ci, et/ou
(ii) une interface homme-machine (39) qui est conçue pour générer des données de demande sur la base d'une entrée par un utilisateur,
dans lequel le dispositif d'entraînement est configuré pour déplacer automatiquement le premier élément de butée entre la position rétractée et la position étendue en fonction des données de demande, dans lequel une commande est configurée pour recevoir les données de demande et pour commander de manière appropriée le dispositif d'entraînement en réponse à celui-ci.

2. Dispositif de soudage par ultrasons selon la revendication 1,
dans lequel le dispositif d'entraînement est configuré pour déplacer l'élément de butée au moyen d'un moteur électrique, au moyen d'un système hydraulique ou au moyen d'un système pneumatique.

3. Dispositif de soudage par ultrasons selon l'une quelconque des revendications précédentes,
dans lequel le dispositif d'entraînement est configuré pour déplacer linéairement le premier élément de butée entre la position rétractée et la position étendue.

4. Dispositif de soudage par ultrasons selon l'une quelconque des revendications 1 et 2,
dans lequel le dispositif d'entraînement est configuré pour faire pivoter le premier élément de butée entre la position rétractée et la position étendue.

5. Dispositif de soudage par ultrasons selon l'une quelconque des revendications précédentes,
comprenant en outre un système de capteurs (41) qui est configuré pour détecter une atteinte de la position rétractée par le premier élément de butée et pour générer ensuite un signal rétracté et/ou pour détecter une atteinte de la position étendue par le premier élément de butée et pour générer ensuite un signal étendu.

6. Dispositif de soudage par ultrasons selon l'une quelconque des revendications précédentes,
comprenant en outre un guide (47) pour guider le premier élément de butée lors d'un mouvement de déplacement entre la position rétractée et la position étendue.

7. Dispositif de soudage par ultrasons selon l'une quelconque des revendications précédentes,
dans lequel le premier élément de butée délimite l'espace de réception avec une seule plaque (12).

8. Dispositif de soudage par ultrasons selon l'une quelconque des revendications précédentes,
comprenant en outre un deuxième élément de butée (49), dans lequel le deuxième élément de butée peut être déplacé entre une position rétractée et une position étendue, dans lequel, dans la position rétractée, le deuxième élément de butée délimite l'espace de réception au moins par zones au niveau d'un sixième côté transversal aux premier à quatrième côtés et opposé au cinquième côté et, dans la position étendue, laisse l'espace de réception ouvert au niveau du sixième côté.

9. Dispositif de soudage par ultrasons selon la revendication 8,
dans lequel le deuxième élément de butée comprend plusieurs segments allongés (51) qui s'étendent chacun dans une direction le long du sixième côté et parallèlement les uns aux autres,
dans lequel chacun des segments peut être déplacé indépendamment des segments adjacents entre la position rétractée et la position étendue.

10. Dispositif de soudage par ultrasons selon la revendication 9, dans lequel au moins certains des segments sont maintenus chacun de manière élastique au niveau d'un élément de déplacement de segment (53) associé respectif, de telle sorte que, lorsqu'ils sont sollicités par force vers la position rétractée, ils soient précontraints de manière élastique vers la position rétractée.

11. Dispositif de soudage par ultrasons selon l'une quelconque des revendications 8 à 10, comprenant en outre un dispositif d'entraînement pour entraîner le deuxième segment de butée, un dispositif de détection de partenaire d'assemblage pour détecter des partenaires d'assemblage dans l'espace de réception à proximité du deuxième segment de butée, un système de capteurs pour détecter une position actuelle du deuxième élément de butée et/ou un guide pour guider un mouvement de déplacement du deuxième élément de butée.
